# EUROPEAN PATENT SPECIFICATION

(11) **EP 3 554 925 B1**
(45) Date of publication and mention of the grant of the patent: **28.04.2021**
(21) Application number: 17817402.5
(22) Date of filing: 20.11.2017
(51) Int. Cl.: B62D 25/24

(54) **SEALING HOLE PLUG**
ABDICHTUNGSLOCHSTOPFEN
FIXATION HERMÉTIQUE DE BOUCHON DANS UN TROU

(30) Priority: 14.12.2016 US 201662434079 P
(43) Date of publication of application: 23.10.2019
(73) Proprietor: Illinois Tool Works Inc., Glenview, IL 60025 (US)
(72) Inventor: KUHM, Michel, Glenview, IL 60025 (US); DORSCHNER, Stephane, Glenview, IL 60025 (US)
(74) Representative: HGF
(86) International application number: PCT/US2017/062530
(87) International publication number: WO 2018/111505

(56) References cited:
- EP-A2- 0 834 442
- WO-A1-2006/056289
- WO-A1-2012/062448
- US-A- 4 301 629

## Description

### RELATED APPLICATIONS

This application relates to and claims priority benefits from U.S. Provisional Patent Application No. 62/434,079, entitled "Sealing Hole Plug," filed December 14, 2016.

### FIELD OF EMBODIMENTS OF THE DISCLOSURE

Embodiments of the present disclosure generally relate to hole plugs, and, more particularly, to hole plugs that are configured to be inserted into holes of components of different sizes.

### BACKGROUND

Various assemblies include panels, blocks, or other such components connected to one another. Automobile assemblies, for example, include various panels and structures connected to other panels or structures, or to an automobile frame.

Certain components, such as blocks and panels, have holes formed therein. During an assembly process, the holes may receive and retain fasteners, or allow tubing, wiring, or the like to pass therethrough. In some instances, however, a hole may not be utilized. Similarly, the hole may be reserved for a future application, for example.

Hole plugs are often used to securely cover and close holes formed within panels of a device. A typical hole plug is formed of a resilient material, such as rubber, that allows the hole plug to flex, while at the same time providing a fluid-tight barrier.

EP 3061675, DE 10303366, and EP 0911132 disclose plugs. United States Patent No. 9,676,425 discloses an expandable hole plug assembly. WO 2006/056289 relates to a system having a closing element that is inserted in a recess to seal the recess. EP 0834442 relates to a closure element having an upper part formed as a flange and a main body formed as a truncated cone-shape. WO 2012/062448 relates to a cruciform shaped plug to be placed in incompletely filled holes in structures. US 4301629 relates to a hole sealing water-tight plug for sealing holes drilled through the interior or exterior wall surface of a house or mobile home.

Typically, a hole plug is sealed to a component around a hole with an adhesive, such as glue, on both sides of the component. Other hole plugs include separate and distinct sealing structures that are used to sealingly engage one side of a component. As such, in order to seal a hole plug to a component, a separate seal and/or material is used, which increases labor time and costs.

### SUMMARY OF EMBODIMENTS OF THE DISCLOSURE

A need exists for a hole plug that may be secured to a component without a separate and distinct sealing structure or adhesive. Further, a need exists for a hole plug that may be efficiently sealingly secured to a component.

With those needs in mind, certain embodiments of the present disclosure provide a hole plug that is configured to plug a hole of a component in accordance with claim 1. The hole plug includes a collar that is configured to abut a first surface of the component. A plugging protuberance extends from the collar. The plugging protuberance includes a first lip and a second lip. The first lip is configured to abut an internal edge of the component that defines the hole. The second lip is configured to abut a second surface of the component that is opposite from the first surface. Each of the first lip and the second lip comprises a ledge that connects to a ramped semi-cone. The plugging protuberance further comprises a dome-shaped nose connected to the second lip.

In at least one embodiment, the hole plug is configured to melt and/or expand when heated to sealingly and securely couple to the component.

In at least one embodiment, the first lip radially extends from a tubular extension that extends from the collar. The second lip connects to the first lip. The first lip is positioned between the collar and the second lip.

In at least one embodiment, the nose may have a first thickness that differs from a second thickness of sidewalls of the hole plug.

The plugging protuberance may include an inwardly-canted annular hinge between the second lip and the nose. The hinge is configured to facilitate uniform expansion of the hole plug during a heating process.

The plugging protuberance may include an injection gate formed at a tip of the nose. The injection gate is configured to assure smooth flow of material and uniform stress distribution during a heating process.

Furthermore, the present invention provides a sealing system that includes a component having a first surface and a second surface opposite from the first surface. A hole extends through the component from the first surface to the second surface. The hole is defined by an internal edge of the component. A hole plug plugs the hole of the component. The hole plug includes a collar that abuts the first surface of the component, and a plugging protuberance extending from the collar. The plugging protuberance includes a first lip and a second lip, wherein the first lip abuts the internal edge of the component that defines the hole. The second lip abuts the second surface of the component that is opposite from the first surface.

### BRIEF DESCRIPTION OF SEVERAL VIEWS OF THE DRAWINGS

Figure 1 illustrates a bottom perspective view of a hole plug, according to an embodiment of the present disclosure.
Figure 2 illustrates a front view of a hole plug, according to an embodiment of the present disclosure.
Figure 3 illustrates a top perspective view of a hole plug, according to an embodiment of the present disclosure.
Figure 4 illustrates a top view of a hole plug, according to an embodiment of the present disclosure.
Figure 5 illustrates a bottom view of a hole plug, according to an embodiment of the present disclosure.
Figure 6 illustrates a cross-sectional view of a hole plug through line 6-6 of Figure 5, according to an embodiment of the present disclosure.
Figure 7 illustrates a cross-sectional view of a portion of a hole plug secured to a component, according to an embodiment of the present disclosure.
Figure 8 illustrates a perspective, partial cross-sectional view of a hole plug secured to a component prior to an expansion process, according to an embodiment of the present disclosure.
Figure 9 illustrates a perspective, partial cross-sectional view of a hole plug secured to a component after an expansion process, according to an embodiment of the present disclosure.
Figure 10 illustrates a flow chart of a method of sealingly securing a hole plug within a hole of a component, according to an embodiment of the present disclosure.

Before the embodiments of the disclosure are explained in detail, it is to be understood that the disclosure is not limited in its application to the details of construction and the arrangement of the components set forth in the following description or illustrated in the drawings. The disclosure is capable of other embodiments and of being practiced or being carried out in various ways. Also, it is to be understood that the phraseology and terminology used herein are for the purpose of description and should not be regarded as limiting.

### DETAILED DESCRIPTION OF EMBODIMENTS OF THE DISCLOSURE

Embodiments of the present disclosure provide a hole plug that is configured to expand and/or melt during a heating process to sealingly engage portions of a component. The hole plug may be formed as a single, unitary piece. The hole plug may include a plurality of sealing and retaining lips that are configured to securely retain the hole plug to a component before the heating process. During the heating process, the lips expand, melt, and/or otherwise flow into areas of the component, thereby increasing a retention force and providing a robust sealing interface therewith.

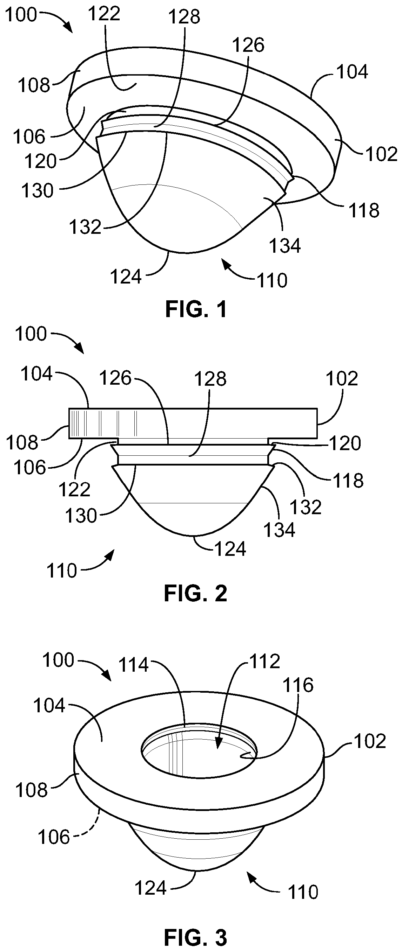

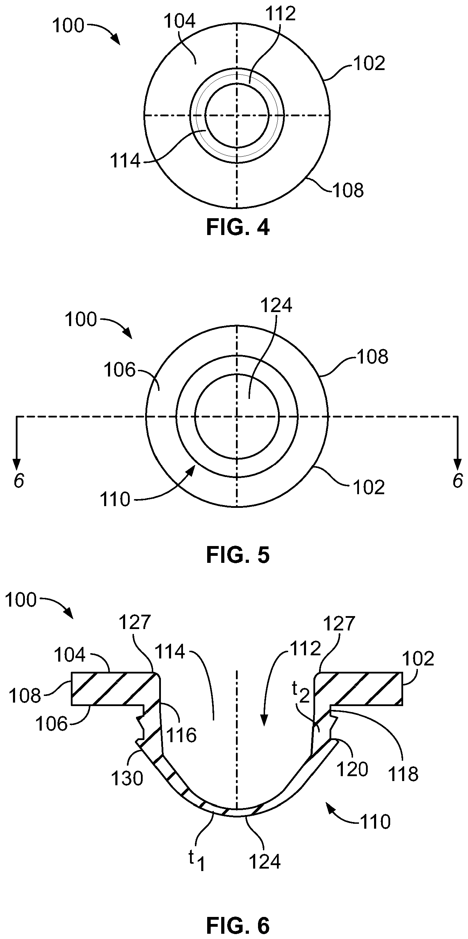

Figure 1 illustrates a bottom perspective view of a hole plug 100, according to an embodiment of the present disclosure. Figure 2 illustrates a front view of the hole plug 100. Figure 3 illustrates a top perspective view of the hole plug 100. Figure 4 illustrates a top view of the hole plug 100. Figure 5 illustrates a bottom view of the hole plug 100. Figure 6 illustrates a cross-sectional view of the hole plug 100 through line 6-6 of Figure 5.

Referring to Figures 1-6, the hole plug 100 includes an annular collar 102 having a planar first annular surface 104 connected to an opposite planar second annular surface 106 through an outer annular edge 108. A plugging protuberance 110 extends downwardly (as shown in the orientations of Figures 1-6) from the second annular surface 106. An internal cavity 112 is defined through the collar 102 and into the plugging protuberance 110. The internal cavity 112 extends from an open end 114 formed through the collar 110 and into internal surfaces 116 of the collar 110 and the plugging protuberance 110. The internal cavity 112 may not pass through the plugging protuberance 110.

The plugging protuberance 110 includes an annular first lip 118 that circumferentially extends around a neck 120 of the plugging protuberance 110. The first lip 118 radially extends from a tubular extension 122 that downwardly extends from the collar 110. The first lip 118 is separated from the second annular surface 106 of the collar 102 by the extension 122. The first lip 118 is spaced apart from the collar 110 towards a distal nose 124 of the plugging protuberance 110. The first lip 110 includes a ledge 126 that connects to a ramped semi-cone 128 that angles inwardly and downwardly from the ledge 126 towards the nose 124.

The plugging protuberance 110 also includes an annular second lip 130 below the first circumferential lip 118. The second lip 130 extends radially around the plugging protuberance 110 below the first lip 118. The second lip 130 is positioned closer to the nose 124 than the first lip 118. The second lip 130 includes a ledge 132 that connects to a ramped semi-cone 134 that angles inwardly and downwardly into the nose 124.

As shown, the first lip 118 may radially extend from the tubular extension 122, which extends from the collar 102. The second lip 130 connects to the first lip 118. The first lip 118 is positioned between the collar 102 and the second lip 130.

As shown in Figure 6, in particular, the thickness t₁ of the nose 124 may be less than the thickness t₂ of the plugging protuberance 110 at sidewalls 127 proximate to the first lip 118 and the second lip 130. The plugging protuberance 110 may be thicker at the sidewalls 127 above the nose 124. That is, the distal nose 124 of the hole plug 100 may be reduced in thickness. The thickness t₁ may be less than the thickness t₂ in order to reduce material flowing away during a heating process that expands the hole plug 100. In short, the thickness of the nose 124 differs from the sidewalls 127.

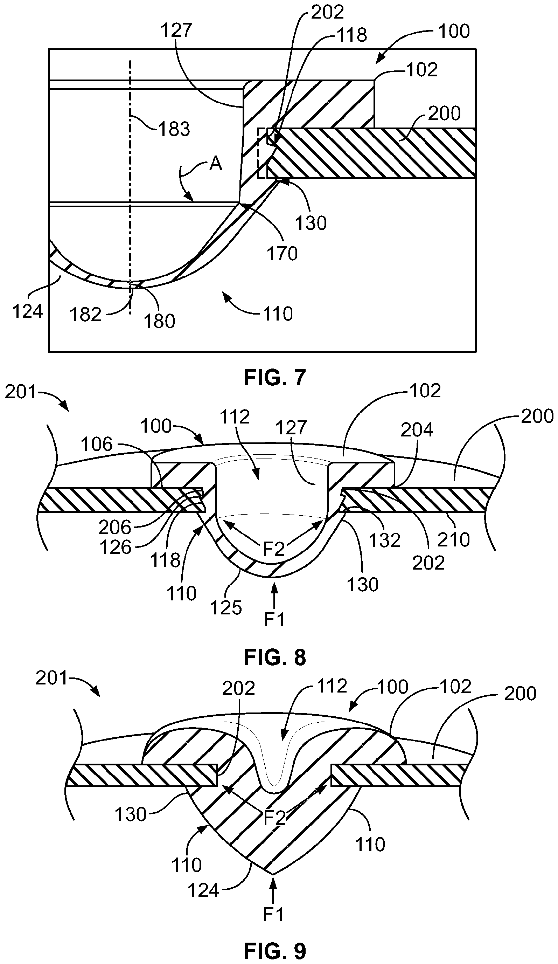

Figure 7 illustrates a cross-sectional view of a portion of the hole plug 100 secured to a component 200. The lips 118 and 130 are configured to securely couple the hole plug 100 to the component 200 before a heating process that expands the hole plug 100. Further, as the hole plug 100 is heated, the hole plug 100 melts and expands. During this process, the lips 118 and 130 melt and expand to sealingly engage the component 200.

The hole plug 100 may include an inwardly-canted annular hinge 170 between the second lip 130 and the nose 124. The hinge 170 may be formed on an internal surface of the hole plug 100. The hinge 170 is configured to facilitate the plugging protuberance 110 in pushing out and expanding during a heating process. For example, during a heating process, the plugging protuberance 110 radially and downwardly expands in the direction of arc A about the hinge 170.

Further, an injection gate 180 may be formed at tip 182 of the nose 124. The injection gate 180 assures smooth flow of material and uniform stress distribution for steady expansion of the material during the heating process. The injection gate 180 may be a straight cylindrical passage that extends through the tip 182. During the heating process, the melting of the hole plug 100 may sealingly fill the injection gate 180.

The injection gate 180 may be axially aligned with a central longitudinal axis 183 of the hole plug 100, which ensures uniform stress distribution in the material for steady expansion during the heating process. After the heating process, the hole plug 100 is resilient and soft, and is therefore able to absorb pressures, and link forces under an edge of the component 200 to secure the hole plug 100 in the hole 202 of the component 200.

Figure 8 illustrates a perspective, partial cross-sectional view of the hole plug 100 secured to the component 200 (such as a panel) prior to an expansion process, according to an embodiment of the present disclosure. A plugging system 201 is formed by the hole plug 100 secured to the component 200. The component 200 may be a planar sheet or panel having the first surface 204 and the second surface 210 opposite from the first surface 204. The hole 202 extends through the component 200 from the first surface 204 to the second surface 210. The hole is defined by the internal edge 206 of the component 200.

The plugging protuberance 110 is positioned within the hole 202 of the component 200. The collar 102 overlays the first or upper surface 204 of the component 200. The first lip 118 abuts the internal edge 206 of the component 200 that defines the hole 202. For example, the ledge 126 of the first lip 118 is urged into and against the internal edge 206.

The second lip 130 is positioned below the hole 202. The ledge 132 of the second lip 130 abuts against a second or lower surface 210 of the component 200. As shown, the portion of the component 200 that surrounds the hole 202 is trapped between the collar 102 (with the second annular surface 106 overlaying a portion of the upper surface 204) and the second lip 130 (such that a portion of the lower surface 210 overlays the ledge 132). Further, the first lip 118 is positioned within the hole 202. In particular, the first lip 118 abuts the internal edge 206 that defines the hole 202.

As shown, the internal cavity 112 is defined between internal surfaces 114 of the collar 102 and the plugging protuberance 110. The nose 124 provides a dome 125. That is, the nose 124 is dome-shaped. The dome 125 of the nose 124 and the difference in thickness of the nose 124 in relation to the sidewalls 127 cause exerted force in the direction of F1 to be transferred radially outward in the direction of F2, thereby ensuring a stable connection to the component 200 before a heating process.

Figure 9 illustrates a perspective, partial cross-sectional view of the hole plug 100 secured to the component 200 after an expansion process, according to an embodiment of the present disclosure. In response to a heating process, the hole plug 100 expands, as shown in Figure 9. The hole plug 100 melts and/or expands during the heating process. For example, as the hole plug 100 is heated, the hole plug 100 melts and expands within and around the hole 202 to sealingly engage the component 200 around and within the hole 202. During and after the heating process, the forces F1 and F2 ensure increased retention between the hole plug 100 and the component 200.

The first lip 118 melts and expands during the heating process to provide a sealing interface with the component. That is, as the first lip 118 melts and expands, the melting first lip 118 fills gaps between the first lip 118 and the component 200, and sealingly engages the component 200. As such, the first lip 118 provides a sealing and retaining lip. Similarly, the second lip 130 melts and expands during the heating process to provide increased retaining strength in relation to the component 200 (as well as providing a sealing interface with the component 200). In this manner, the second lip 130 provides a sealing and retaining lip.

As shown, during the heating process, the hole plug 100 melts and expands. As such, the second lip 130 expands to provide increased retaining engagement with the component 200. Further, the expansion of the hole plug 100 reduces the size of the internal cavity 112. For example, the plugging protuberance 110 expands outwardly and inwardly to provide increased retention engagement with the component 200, as well as fill portions of the internal cavity 112. Additionally, the collar 102 radially and axially expands. As such, the expanded collar provides increased retaining engagement with the component 200. The melting and expansion of the hole plug 100 sealingly fills any gaps or openings between the hole plug 100 and the component 200, thereby providing a robust sealing interface that prevents fluid leakage therebetween. Any gaps between the plugging protuberance 110 and the component 200 proximate to the hole 202 are filled during the melting and expansion of the hole plug. The first lip 118 (shown in Figure 7) may melt and expand around the hole 202 and into the internal cavity 112, thereby providing a secure, sealed connection with the component 200.

Referring to Figures 1-9, the hole plug 100 may be formed of various materials that are configured to expand and/or otherwise flow into open spaces during a heating process. For example, the hole plug 100 may be formed of thermoplastic elastomers such as cross-linked expandable EVA, or TPS-SEBS modified PET. The variation in thickness of the distal nose 124 in relation to sidewalls 127 resists material flowing away from the component 200 during the heating process, and provides a dome-shape of the nose 124 before and after the heating process. Further, the variation in thickness ensures a strong retention force before the heating process, as the pressure on the bottom of the hole plug 100 is transferred to the sidewalls 127, thereby locking the pre-heated hole plug 100 to the component 200. The dome shape of the nose 124 provides the hole plug 100 with a relatively strong retaining force in relation to the component 200.

The hole plug 100 may be heated in an oven, for example, at temperatures between 130°C to 180°C. It has been found that, in at least one embodiment, the hole plug 100 efficiently expands at a temperature of 160°C. In at least one other embodiment, a hole plug 100 formed of TPS-SEBS modified PET melts without expanding between 140°C to 180°C, and sealingly and securely engages the component via the lips 118 and 130 melting at areas around the hole 202 of the component 200.

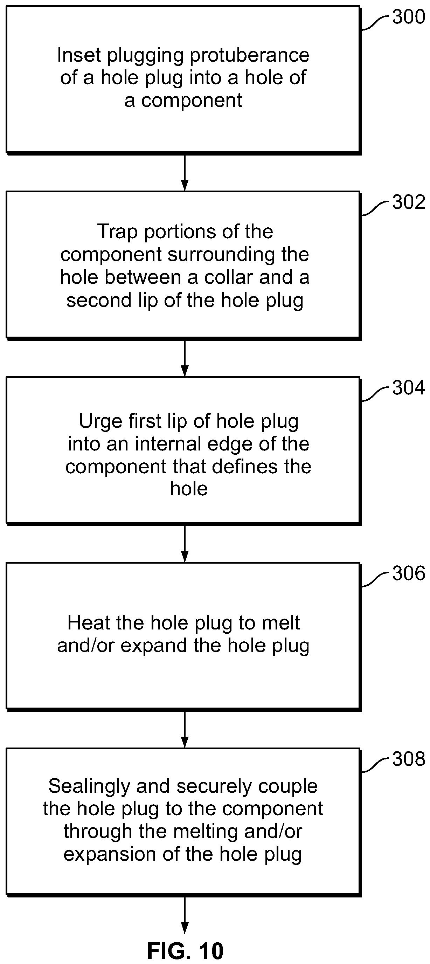

Figure 10 illustrates a flow chart of a method of sealingly securing a hole plug 100 within a hole 202 of a component 200, according to an embodiment of the present disclosure. Referring to Figures 1-10, the method begins at 300, at which the plugging protuberance 110 of the hole plug 100 is inserted onto the hole 202 of the component 200. At 302, portions of the component 200 surrounding the hole 202 are trapped between the collar 102 and the second lip 130 of the hole plug 100. At 304, the first lip 118 is urged into the internal edge 206 of the component 200 that defines the hole 200. At 306, the hole plug 100 is heated to melt and/or expand the hole plug 100. At 308, the hole plug 100 sealingly and securely couples to the component 200 through the melting and/or expansion of the hole plug 100.

As described herein, embodiments of the present disclosure provide a hole plug that melts and/or expands during a heating process to sealingly engage portions of a component, as well as provide increased retention therewith. During the heating process, the lips expand, melt, and/or otherwise flow into areas of the component, thereby increasing a retention force and providing a robust sealing interface therewith.

Embodiments of the present disclosure provide a hole plug that may be secured to a component without a separate and distinct sealing structure or adhesive. Further, the hole plug is configured to be efficiently sealingly secured to a component.

While various spatial and directional terms, such as top, bottom, lower, mid, lateral, horizontal, vertical, front and the like may be used to describe embodiments of the present disclosure, it is understood that such terms are merely used with respect to the orientations shown in the drawings. The orientations may be inverted, rotated, or otherwise changed, such that an upper portion is a lower portion, and vice versa, horizontal becomes vertical, and the like.

Variations and modifications of the foregoing are within the scope of the present disclosure which is defined by the appended claims. It is understood that the embodiments disclosed and defined herein extend to all alternative combinations of two or more of the individual features mentioned or evident from the text and/or drawings. All of these different combinations constitute various alternative aspects of the present disclosure. The embodiments described herein explain the best modes known for practicing the disclosure and will enable others skilled in the art to utilize the disclosure. The claims are to be construed to include alternative embodiments to the extent permitted by the prior art.

## Claims

1. A hole plug (100) that is configured to plug a hole (202) of a component (200) providing a robust sealing interface that prevents fluid leakage therebetween, the hole plug (100) comprising:
a collar (102) that is configured to abut a first surface (204) of the component (200); and
a plugging protuberance (110) extending from the collar (102), wherein the plugging protuberance (110) comprises a first lip (118) and a second lip (130), wherein the first lip (118) is configured to abut an internal edge (206) of the component (200) that defines the hole (202), and wherein the second lip (130) is configured to abut a second surface (210) of the component (200) that is opposite from the first surface (204), and wherein each of the first lip (118) and the second lip (130) comprises a ledge (126, 132) that connects to a ramped semi-cone (128, 134),
**characterised in that** the plugging protuberance further comprises a dome-shaped nose connected to the second lip.

2. The hole plug (100) of claim 1, wherein the hole plug (100) is configured to one or both of melt or expand when heated to sealingly and securely couple to the component (200).

3. The hole plug (100) of claim 1, wherein the first lip (118) radially extends from a tubular extension (122) that extends from the collar (102), wherein the second lip (130) connects to the first lip (118), and wherein the first lip (118) is positioned between the collar (102) and the second lip (130).

4. The hole plug (100) of claim 1, wherein the nose (124) has a first thickness that differs from a second thickness of sidewalls (127) of the hole plug (100).

5. The hole plug (100) of claim 1, wherein the plugging protuberance (110) further comprises an inwardly-canted annular hinge (170) between the second lip (130) and the nose (124),
wherein the hinge (170) is configured to facilitate uniform expansion of the hole plug (100) during a heating process.

6. The hole plug (100) of claim 1, wherein the plugging protuberance (110) further comprises an injection gate (180) formed at a tip (182) of the nose (124), wherein the injection gate (180) is configured to assure smooth flow of material and uniform stress distribution during a heating process.

7. A sealing system (201) comprising:
a component (200) having a first surface (204) and a second surface (210) opposite from the first surface (204), wherein a hole (202) extends through the component (200) from the first surface (204) to the second surface (210), and wherein the hole (202) is defined by an internal edge (206) of the component (200); and
a hole plug (100) according to any one of claims 1 to 6 that plugs the hole (202) of the component (200).

## Patentansprüche

1. Lochstopfen (100), der dafür gestaltet ist, ein Loch (202) einer Komponente (200) zu verstopfen, eine robuste Dichtungsgrenzfläche bereitstellend, die ein Austreten von Fluid zwischen diesen verhindert,
wobei der Lochstopfen (100) umfasst:
einen Kragen (102), der dafür gestaltet ist, an einer ersten Oberfläche (204) der Komponente (200) anzuliegen und
eine verstopfende Ausstülpung (110), die sich von dem Kragen (102) aus erstreckt, wobei die verstopfende Ausstülpung (110) eine erste Lippe (118) und eine zweite Lippe (130) umfasst, wobei die erste Lippe (118) dafür gestaltet ist, an einem Innenrand (206) der Komponente (200) anzuliegen, welche das Loch (202) definiert, und wobei die zweite Lippe (130) dafür gestaltet ist, an einer zweiten Oberfläche (210) der Komponente (200) anzuliegen, die der ersten Oberfläche (204) gegenüberliegt, und wobei die erste Lippe (118) und die zweite Lippe (130) jeweils einen Absatz (126, 132) umfassen, der an einen gerampten Halbkegel (128, 134) anschließt,
**dadurch gekennzeichnet, dass** die verstopfende Ausstülpung ferner eine kuppelförmige Nase umfasst, die an die zweite Lippe anschließt.

2. Lochstopfen (100) nach Anspruch 1, wobei der Lochstopfen (100) dafür gestaltet ist, zu schmelzen und/oder sich auszudehnen, wenn er erwärmt wird, um sich abdichtend und sicher an die Komponente (200) zu koppeln.

3. Lochstopfen (100) nach Anspruch 1, wobei sich die erste Lippe (118) radial von einer röhrenförmigen Erweiterung (122) aus erstreckt, die sich von dem Kragen (102) aus erstreckt, wobei die zweite Lippe (130) an die erste Lippe (118) anschließt und wobei die erste Lippe (118) zwischen dem Kragen (102) und der zweiten Lippe (130) positioniert ist.

4. Lochstopfen (100) nach Anspruch 1, wobei die Nase (124) eine erste Dicke aufweist, die sich von einer zweiten Dicke von Seitenwänden (127) des Lochstopfens (100) unterscheidet.

5. Lochstopfen (100) nach Anspruch 1, wobei die verstopfende Ausstülpung (110) ferner ein einwärts kippendes ringförmiges Gelenk (170) zwischen der zweiten Lippe (130) und der Nase (124) umfasst,
wobei das Gelenk (170) dafür gestaltet ist, ein gleichmäßiges Ausdehnen des Lochstopfens (100) während des Erwärmungsprozesses zu unterstützen.

6. Lochstopfen (100) nach Anspruch 1, wobei die verstopfende Ausstülpung (110) ferner eine Einspritzöffnung (180) umfasst, die an einer Spitze (182) der Nase (124) gebildet ist, wobei die Einspritzöffnung (180) dafür gestaltet ist, einen gleichmäßigen Materialfluss und eine gleichmäßige Spannungsverteilung während des Erwärmungsprozesses sicherzustellen.

7. Dichtungssystem (201), umfassend:
eine Komponente (200) mit einer ersten Oberfläche (204) und einer zweiten Oberfläche (210) gegenüber der ersten Oberfläche (204), wobei sich ein Loch (202) durch die Komponente (200) von der ersten Oberfläche (204) zu der zweiten Oberfläche (210) erstreckt und wobei das Loch (202) durch einen Innenrand (206) der Komponente (200) definiert ist, und
einen Lochstopfen (100) nach einem der Ansprüche 1 bis 6, der das Loch (202) der Komponente (200) verstopft.

## Revendications

1. Bouchon (100) qui est configuré pour boucher un trou (202) d'un composant (200), fournissant une interface d'étanchéité robuste qui empêche toute fuite de fluide entre eux, le bouchon (100) comprenant :
un collier (102) qui est configuré pour s'appuyer contre une première surface (204) du composant (200) ; et
une protubérance de bouchage (110) s'étendant depuis le collier (102), la protubérance de bouchage (110) comprenant une première lèvre (118) et une deuxième lèvre (130), la première lèvre (118) étant configurée pour s'appuyer contre un bord interne (206) du composant (200) qui définit le trou (202), et la deuxième lèvre (130) étant configurée pour s'appuyer contre une deuxième surface (210) du composant (200) qui est à l'opposé de la première surface (204), et la première lèvre (118) et la deuxième lèvre (130) comprenant chacune un épaulement (126, 132) qui se relie à un demi-cône incliné (128, 134),
**caractérisé en ce que** la protubérance de bouchage comprend en outre un nez en forme de dôme relié à la deuxième lèvre.

2. Bouchon (100) de la revendication 1, le bouchon (100) étant configuré pour fondre et/ou se dilater lorsqu'il est chauffé pour se coupler de façon étanche et solide au composant (200).

3. Bouchon (100) de la revendication 1, dans lequel la première lèvre (118) s'étend radialement depuis une extension tubulaire (122) qui s'étend depuis le collier (102), dans lequel la deuxième lèvre (130) se relie à la première lèvre (118), et dans lequel la première lèvre (118) est positionnée entre le collier (102) et la deuxième lèvre (130).

4. Bouchon (100) de la revendication 1, dans lequel le nez (124) a une première épaisseur qui diffère d'une deuxième épaisseur de parois latérales (127) du bouchon (100) .

5. Bouchon (100) de la revendication 1, dans lequel la protubérance de bouchage (110) comprend en outre une charnière annulaire penchée vers l'intérieur (170) entre la deuxième lèvre (130) et le nez (124),
la charnière (170) étant configurée pour faciliter une dilatation uniforme du bouchon (100) pendant un traitement de chauffage.

6. Bouchon (100) de la revendication 1, dans lequel la protubérance de bouchage (110) comprend en outre une entrée d'injection (180) formée à un bout (182) du nez (124), l'entrée d'injection (180) étant configurée pour assurer un écoulement régulier de matière et une distribution uniforme des contraintes pendant un traitement de chauffage.

7. Système d'étanchéité (201) comprenant :
un composant (200) ayant une première surface (204) et une deuxième surface (210) à l'opposé de la première surface (204), un trou (202) s'étendant à travers le composant (200) de la première surface (204) à la deuxième surface (210), et le trou (202) étant défini par un bord interne (206) du composant (200) ; et
un bouchon (100) selon l'une quelconque des revendications 1 à 6 qui bouche le trou (202) du composant (200).
